# EUROPÄISCHE PATENTSCHRIFT

(11) **EP 1 644 154 B1**
(45) Veröffentlichungstag und Bekanntmachung des Hinweises auf die Patenterteilung: **28.03.2007**
(21) Anmeldenummer: 04730942.2
(22) Anmeldetag: 04.05.2004
(51) Int. Cl.: B23K 9/133, B23K 9/12, B23K 9/28

(54) **SCHWEISSBRENNER MIT EINER ANTRIEBSEINHEIT UND MIT EINEM DRAHT-PUFFERSPEICHER**
WELDING TORCH WITH A DRIVE UNIT AND A WIRE BUFFER STORE
CHALUMEAU SOUDEUR A UNITE D'ENTRAINEMENT ET A MOYENS DE RESERVE TAMPON DE FIL

(30) Priorität: 03.07.2003 AT 10222003
(43) Veröffentlichungstag der Anmeldung: 12.04.2006
(73) Patentinhaber: Fronius International GmbH, 4643 Pettenbach (AT)
(72) Erfinder: HUBINGER, Manfred, A-4550 Kremsmünster (AT); TRAUSNER, Martin, A-4642 Sattledt (AT)
(74) Vertreter: Sonn & Partner Patentanwälte
(86) Internationale Anmeldenummer: PCT/AT2004/000152
(87) Internationale Veröffentlichungsnummer: WO 2005/002775

(56) Entgegenhaltungen:
- EP-A- 1 384 547
- WO-A-01/38034
- DE-A- 4 320 405
- US-A- 3 693 858
- US-A- 4 837 420

## Beschreibung

Die Erfindung betrifft einen Schweißbrenner gemäß dem Oberbegriff des Anspruchs 1 (siehe, z.B., WO-A-01/38034).

Über die Antriebseinheit, welche üblicherweise innerhalb des Brennergehäuses angeordnet ist, wird der Schweißdraht, insbesondere mit unterschiedlichen Drahtfördergeschwindigkeiten oder mit unterschiedlichen Förderrichtungen transportiert. Die Antriebseinheit kann aber auch außerhalb des Brennergehäuses in einem separaten Modul oder in einem getrennten Teil des Brennergehäuses untergebracht sein.

Bei den neuesten Schweißtechniken, bei denen der Schweißdraht nicht mehr nur mit konstanter Geschwindigkeit in einer Richtung gefördert wird, sondern für die Zündung des Lichtbogens und/oder während des Schweißprozesses eine Vorwärts- und Rückwärtsbewegung oder unterschiedliche Fördergeschwindigkeiten des Schweißdrahtes während des Schweißprozesses durchgeführt werden, kommt der Drahtförderung eine große Bedeutung zu. Aufgrund der unterschiedlichen Drahtgeschwindigkeiten bzw. Förderrichtungen des Schweißdrahtes ergibt sich bei den derzeitigen Drahtfördersystemen das Problem, dass das Ansprechverhalten der Schweißdrahtförderung sehr träge ist und somit keine optimalen Schweißergebnisse erzielt werden können. Dies ergibt sich deshalb, da aufgrund der unterschiedlichen Fördergeschwindigkeiten oder bei Vor-/Rückwärts-Drahtförderung des Schweißdrahtes sich im Drahtfördersystem ein Überschuss an Schweißdraht ergibt, der beim Stand der Technik über das gesamte Schlauchpaket zurück in einen Draht-Pufferspeicher gefördert werden muss.

Beispielsweise ist aus der DE 197 38 785 C2 eine Vorrichtung zum Lichtbogenschweißen mit abschmelzender Elektrode bekannt, bei der der Schweißdraht von einer Vorratstrommel über zwei Drahtvorschübe an die Schweißstelle zugeführt wird. Dabei wird ein Kurzschluss-Schweißprozess beschreiben, bei dem die Schweißdrahtförderung vor Abschluss der Tropfenbildung einen den Übergang des Tropfens unterstützende Bewegung ausführt, d.h., dass beim Auftreten eines Kurzschlusses der Schweißdraht vom Drahtvorschub zurückgezogen wird und anschließend nach Erreichen eines gewissen Abstandes wieder vorwärts bewegt wird, wobei dabei der Schweißdraht in einem Drahtpuffer transportiert wird. Die Ausbildung des Drahtpuffers ist jedoch nicht zu entnehmen.

Aus der DE 38 27 508 A1 ist eine Transportvorrichtung bekannt, bei der der Schweißdraht auch bei ungünstigen Krafteinwirkungen mit konstanter Kraft gefördert wird und Zug- bzw. Druckspannungen vermieden werden. Der Schweißdraht wird zwischen einem schiebenden Drahtvorschub, der im Schweißgerät oder in einem Drahtvorschubgerät angeordnet ist, und einem ziehenden Drahtvorschub, der bevorzugt im Bereich des Schweißbrenners oder im Schweißbrenner selbst angeordnet ist, durch einen ausweichenden Teil und einen gekrümmten Schlauch geführt. Die Schlauchspannung wird von einer Feder abgestützt. Das ausweichfähige Teil ist mit einem Steuerorgan gekoppelt, welches den Ausweichweg des ausweichenden Teiles bei Entstehen von Druck- oder Zugspannungen am Schweißdraht misst und einer Steuerung zur Kompensierung über eine Geschwindigkeitsregelung des ersten Antriebes zuführt. Bei dieser Lösung wird der Schweißdraht von der Vorratstrommel über den ersten Drahtvorschub abgewickelt und in einen Schlauch bzw. eine Drahtseele eingeführt. Die Drahtseele ist anschließend freiliegend angeordnet und bildet in diesem freiliegenden Bereich den Draht-Pufferspeicher in Form einer Schlaufe aus, wobei sich die Schlaufe in diesem freiliegenden Bereich verformen kann, also die Schlaufe vergrößert oder verkleinert wird und somit mehr oder weniger Schweißdraht aufgenommen werden kann. Anschließend wird die Drahtseele in das Schlauchpaket eingeführt und erstreckt sich bis zum weiteren Drahtvorschub, der bevorzugt im Bereich des Schweißbrenners oder im Schweißbrenner selbst angeordnet ist.

Eine weitere Ausbildung eines Drahtpuffers ist aus der DE 43 20 405 C2 bekannt, bei der eine Vorrichtung zur schlupffreien Förderung eines Schweißdrahtes beschrieben ist. Dabei wird wiederum zwischen zwei Drahtvorschüben ein Draht-Pufferspeicher bzw. Drahtpuffer gebildet, wobei dieser derart aufgebaut ist, dass der Schweißdraht eine vollständige Drahtschlaufe ausbildet, bevor dieser in das Schlauchpaket eingeführt wird. Der Draht-Pufferspeicher wird also durch eine Schlaufe zwischen zwei voneinander beabstandeten Platten gebildet, deren gegenseitiger Abstand größer ist als der Durchmesser des Schweißdrahtes. Um den Füllstand des Drahtpuffers zu überwachen, ist ein Sensor angeordnet, der den Durchmesser der Schlaufe des Schweißdrahtes erfasst.

Nachteilig ist bei den zuvor beschriebenen Systemen, dass für diese Art des Drahtpuffers bzw. des Draht-Pufferspeichers ein sehr großer Platzbedarf notwendig ist, wodurch eine Anwendung nur im Bereich des Schweißgerätes bzw. des Drahtvorschubgerätes oder als Extragerät sinnvoll realisiert werden kann. Der Schweißdraht muss somit vom Drahtpuffer weg über das gesamte Schlauchpaket an den Schweißbrenner und wieder zurück in den Draht-Pufferspeicher gefördert werden. Die Folge sind große Reibungsverluste und ein relativ schlechtes Ansprechverhalten der Drahtförderung. Die Reibungsverluste und die große Trägheit der Drahtförderung treten deshalb auf, da bei den bekannten Drahtförderungen der Schweißdraht in einer Drahtseele verläuft, die in einem Führungsrohr bevorzugt im Schlauchpaket eingeschoben wird, wobei der Innendurchmesser des Führungsschlauches nur unwesentlich größer ist, als der Außendurchmesser der Drahtseele. Somit wird eine exakte Führung der Drahtseele erreicht, jedoch muss beispielsweise bei einer Förderrichtungsumkehr der Schweißdraht über die gesamte Länge der Drahtseele, also des Schlauchpaketes, zurück in den Draht-Pufferspeicher geschoben werden.

Weiters ist aus der US 6 486 438 B1 eine automatische Schweißanlage bekannt, bei der der Schweißbrenner an einem Führungsarm befestigt ist und die Zuführung des Schweißdrahtes winkelig zum Schweißbrenner erfolgt. Dabei weist der Schweißbrenner bzw. der Brennergriff eine Kupplungsvorrichtung auf, an die das Schlauchpaket bzw. ein Drahtführungsschlauch angekoppelt wird. Der Schweißdraht wird über eine Drahtseele in Form einer Spiralfeder dem Schweißbrenner zugeführt. Dabei wird die Drahtseele bis unmittelbar vor das Kontaktrohr im Schweißbrenner geführt.

Nachteilig ist hierbei, dass bei einem derartigen Aufbau kein Draht-Pufferspeicher realisiert ist und somit bei einem Richtungswechsel der Förderung der Schweißdraht über das gesamte Schlauchpaket zurückgeschoben werden muss.

Weitere Schweißbrenner mit Drahtpufferspeichern sind beispielsweise in der JP 1122673 A, der SU 1489941 A1, der JP 55112176 A beschrieben.

Die Aufgabe der vorliegenden Erfindung besteht daher in der Schaffung eines Schweißbrenners der gegenständlichen Art, der sehr einfach und kompakt aufgebaut ist und ein verbessertes dynamisches Verhalten der Drahtförderung aufweist. Nachteile des Standes der Technik sollen vermieden oder reduziert werden.

Die erfindungsgemäßen Aufgaben werden dadurch gelöst, dass der Drahtpufferspeicher unmittelbar nach dem Bereich des Anschlusses des Schlauchpakets innerhalb des Brennerkörpers und das Schlauchpaket in einem Winkel bis zu 90° zur Mittelachse des Schweißbrenners angeordnet ist, wobei ein Sensor zur Erfassung des im Drahtpufferspeicher gespeicherten Schweißdrahtes in Förderrichtung des Schweißdrahtes gesehen vor der Antriebseinheit angeordnet ist. Durch den Sensor kann der im Drahtpufferspeicher gespeicherte Schweißdraht erfasst werden. Damit wird in vorteilhafter Weise erreicht, dass durch den bogenförmigen Verlauf bzw. Verlauf in Form einer Schlaufe durch Veränderung des Bogenradius bzw. Schlaufendurchmessers überschüssiger Schweißdraht aufgenommen werden kann, so dass der überschüssige Schweißdraht nicht mehr über das gesamte Schlauchpaket zurückgefördert werden muss. Dadurch wird das Ansprechverhalten bzw. das dynamische Verhalten wesentlich verbessert, da der Draht-Pufferspeicher gleich vor der Antriebseinheit im Brennerkörper angeordnet ist und somit nur mehr sehr kurze Förderwege bei Geschwindigkeitsänderungen bzw. Förderrichtungsumkehr während des Schweißprozesses zurückgelegt werden müssen. Somit wird der Draht-Pufferspeicher direkt im Schweißbrenner mit geringer Größe und geringem Gewicht realisiert. Vorteilhaft ist auch weiters, dass der Draht-Pufferspeicher im Brennerkörper geschützt angeordnet ist und dort keine Verschmutzungen auftreten können. Durch die geringe Baugröße eignet sich ein derartiger Schweißbrenner auch besonders für Roboteranwendungen und schränkt die Bewegungsfreiheit des Roboters im Wesentlichen nicht ein. Durch die Anordnung des Draht-Pufferspeichers unmittelbar nach dem Anschluss des Schlauchpaketes am Brennerkörper und vor der Antriebseinheit zum Fördern des Schweißdrahtes wird auch erreicht, dass die Antriebseinheit im Schweißbrenner im Wesentlichen kraftfrei arbeiten kann, wodurch das dynamische Verhalten der Förderung des Schweißdrahtes wesentlich verbessert wird. Der Schweißdraht kann durch eine Drahtseele umgeben sein. Aufgrund der Anordnung des Drahtpufferspeichers im Brennerkörper des Schweißbrenners ist der Sensor auch durch den Brennerkörper geschützt und kann weniger leicht verschmutzt werden. Durch die Anordnung des Schlauchpakets in einem Winkel von bis zu 90° zur Mittelachse des Schweißbrenners wird die Handhabung des Schweißbrenners, insbesondere auch bei Roboteranwendungen erleichtert, da auf diese Weise das Schlauchpaket leicht bei einer Drehung um die 6. Achse unterhalb der 3. Achse hindurchgeführt werden kann.

Gemäß einer Ausführungsvariante des Schweißbrenners ist die den Schweißdraht umgebende Drahtseele im Endbereich im Brennerkörper in Längsrichtung frei beweglich angeordnet. Bei einer Veränderung des bogenförmigen Verlaufs des Schweißdrahtes ändert sich somit auch die Lage des freien Endes der Drahtseele, welche zur Erfassung der Menge des im Draht-Pufferspeichers enthaltenen Schweißdrahtes registriert werden kann.

Zu diesem Zweck kann ein Sensor zur Erfassung der Bewegung der Drahtseele im frei beweglichen Endbereich der Drahtseele angeordnet sein.

Gemäß einer Ausführungsvariante des Sensors kann im frei beweglichen Endbereich der Drahtseele ein Indikator angeordnet sein und der Sensor zumindest eine dem Indikator umgebende Spule aufweisen, deren Induktivität durch die Lage des Indikators veränderbar ist. Somit kann durch Erfassung der Induktivität der zumindest einen Spule auf die Lage der Drahtseele und somit auf den Zustand des Draht-Pufferspeichers rückgeschlossen werden.

Gemäß einer anderen Ausführungsvariante kann die Drahtseele im Bereich der Antriebseinheit auch fixiert sein. Bei dieser Variante ermittelt der Sensor zur Erfassung des Draht-Pufferspeichers, beispielsweise die Lage des bogenförmigen Verlaufs des Schweißdrahtes, was beispielsweise durch einen optischen Sensor erfolgen kann.

Schließlich ist es auch möglich, dass die Drahtseele unmittelbar nach dem Bereich des Anschlusses des Schlauchpaketes am Brennerkörper endet, und dass der Schweißdraht im Bereich des Draht-Pufferspeichers in einem flexiblen Führungsschlauch angeordnet ist. Durch diese Ausführungsvariante wird ein leichterer Wechsel oder Tausch der Drahtseele sowie des Schweißdrahtes ermöglicht.

Zum Erleichtern des Einfädelns des Schweißdrahtes bzw. der Drahtseele und andererseits ein Begrenzen der Veränderung des bogenförmigen Verlaufs zum Begrenzen können im Brennerkörper Begrenzungselemente zur Begrenzung des bogenförmigen Verlaufs des ungeführten Schweißdrahtes angeordnet sein.

Der Anschluss des Schlauchpaketes am Brennerkörper kann durch eine Kupplungsvorrichtung gebildet sein, welche ein einfaches und rasches Anschließen des Schlauchpaketes am Brennerkörper ermöglicht. Die Kupplungsvorrichtung kann durch einen Zentralanschluss gebildet werden, über den sämtliche Leitungen, wie die Schweißleitung, Steuerleitungen, Kühlkreisleitungen, ein Drahtführungsschlauch, die Drahtseele und der Schweißdraht, zugeführt und angeschlossen werden.

Schließlich ist es von Vorteil, wenn das Schlauchpaket gegenüber dem Brennerkörper verstellbar angeordnet ist, so dass durch die Verstellung die Menge des im Draht-Pufferspeicher enthaltenen Schweißdrahtes veränderbar ist.

Die vorliegende Erfindung wird anhand der beigefügten Zeichnungen, welche Ausführungsbeispiele des Schweißbrenners beschreiben, näher erläutert. Darin zeigen:
Fig. 1 eine schematische Darstellung einer Schweißmaschine bzw. eines Schweißgerätes;
Fig. 2 eine schaubildliche Darstellung des Schweißbrenners mit darin angeordnetem Draht-Pufferspeicher;
Fig. 3 ein weiteres Ausführungsbeispiel des Schweißbrenners mit fixierter Drahtseele;
Fig. 4 ein Ausführungsbeispiel des Schweißbrenners mit freiliegendem Schweißdraht als Draht-Pufferspeicher;
Fig. 5 ein Schweißbrenner mit einem Führungsschlauch als Draht-Pufferspeicher;
Fig. 6 ein Schweißbrenner mit zwei Kupplungsvorrichtungen;
Fig. 7 ein Ausführungsbeispiel des Schweißbrenners mit verstellbarer Kupplungsvorrichtung; und
Fig. 8 eine schematische Darstellung eines Schweißbrenners mit verstellbarem Brennerkörper.

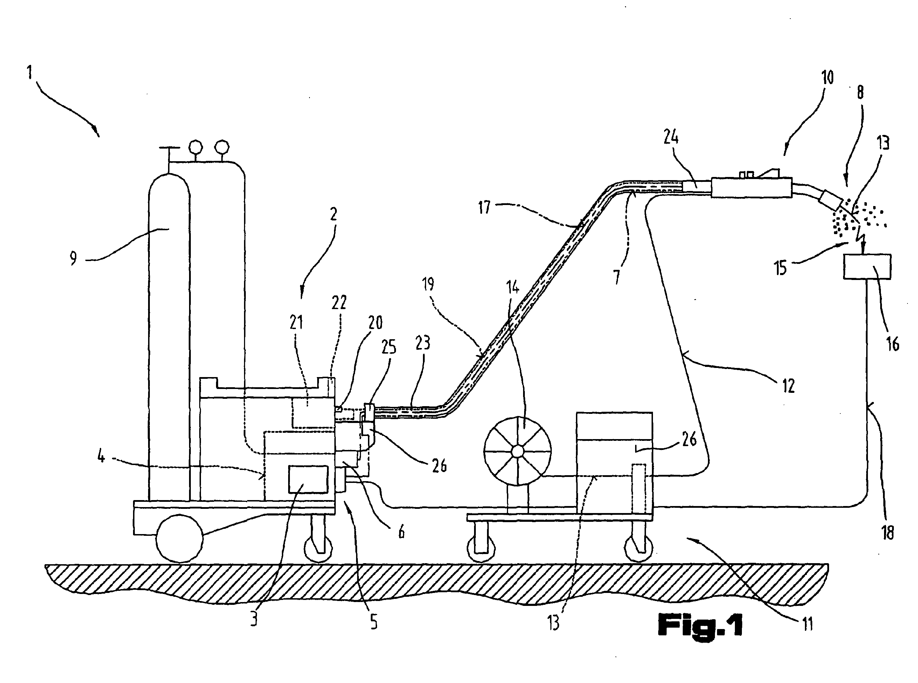

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dergl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der nicht abschmelzenden Elektrode, nicht dargestellt, und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

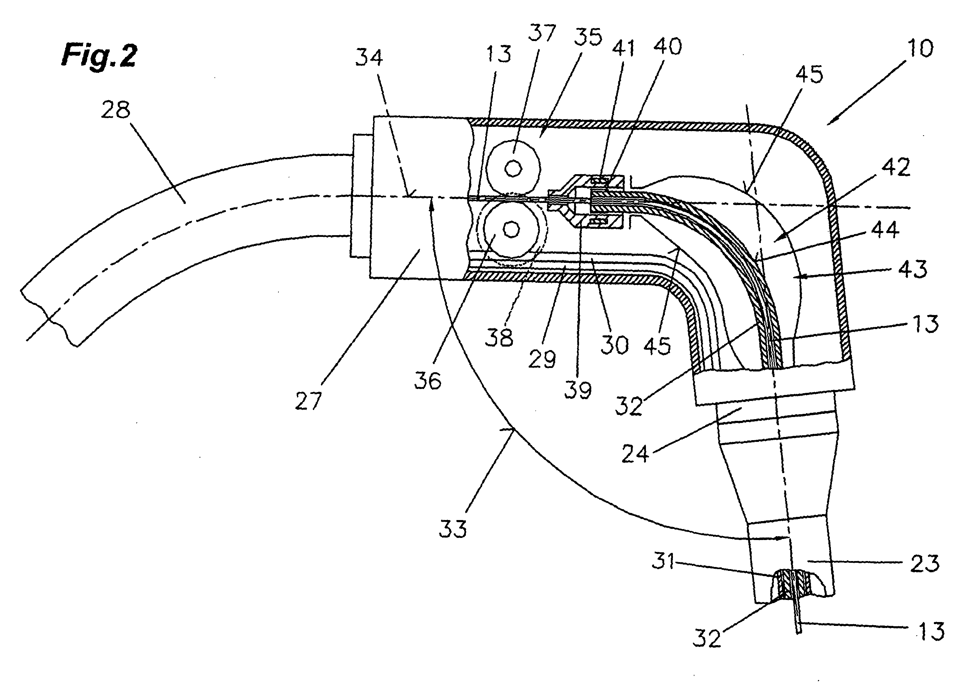

In Fig. 2 ist ein schematischer Aufbau eines Schweißbrenners 10, der aus einem Brennerkörper 27 bzw. Brennergriff, und einem an diesem verbundenen Rohrbogen 28 gebildet. Bevorzugt ist der Rohrbogen 28 lösbar mit dem Brennerkörper 27 verbunden. Der Übersicht halber werden bei dem dargestellten Schweißbrenner 10 nur jene Teile gezeigt, die für die Lösung der Aufgabe der Erfindung notwendig sind. Die restlichen Teile des Schweißbrenners 10 können entsprechend dem Stand der Technik angeordnet und ausgebildet werden.

Am Brennerkörper 27 ist die Kupplungsvorrichtung 24 vorgesehen, an dem das Schlauchpaket 23 anschließbar ist. Die Kupplungsvorrichtung 24 kann durch einen Zentralanschluss gebildet werden, über den sämtliche Leitungen, wie die Schweißleitung 17, Steuerleitungen 29, Kühlkreisleitungen 30, der über einen Drahtführungsschlauch 31 und einer Drahtseele 32 zugeführte Schweißdraht 13 usw., zugeführt und angeschlossen werden. Dabei ist die Kupplungsvorrichtung 24 derart am Brennerkörper 27 angeordnet, dass das Schlauchpaket 23 winkelig, insbesondere in einem Winkel 33 von bis zu 90° zu einer Mittelachse 34, insbesondere der Längsmittelachse des Schweißbrenners 10, angeordnet ist. Selbstverständlich ist es auch möglich, das Schlauchpaket 23 fix, also ohne Kupplungsvorrichtung 24, mit dem Schweißbrenner 10 zu verbinden.

Weiters ist im Brennerkörper 27 eine Antriebseinheit 35 integriert. Die Antriebseinheit 35 dient bevorzugt zum Fördern des Schweißdrahtes 13, insbesondere für unterschiedliche Drahtfördergeschwindigkeiten und/oder einer Vor-/Rückwärts-Drahtförderung des Schweißdrahtes 13. Dabei besteht die Antriebseinheit 35 aus zumindest einer Antriebsrolle 36 und einer Druckrolle 37, wobei die Antriebsrolle 36 mit einem Elektromotor 38, wie schematisch dargestellt, verbunden ist. Es ist selbstverständlich auch möglich, dass eine 4-Rollen-Antriebseinheit anstelle der dargestellten 2-Rollen-Antriebseinheit 35 eingesetzt werden kann.

In normaler Förderrichtung des Schweißdrahtes 13 gesehen, ist vor der Antriebseinheit 35 ein Sensor 39, zur Erfassung der Bewegung der Drahtseele 32 angeordnet. Zu diesem Zweck ist die Drahtseele 32 im gezeigten Ausführungsbeispiel im Endbereich nicht fixiert. Am Ende der Drahtseele 32 ist gemäß der dargestellten Variante ein Indikator 40 angeordnet. Der Sensor 39 weist zumindest eine Spule 41 auf, in welche die Drahtseele 32 mit dem Indikator 40 taucht. Die Lageänderung des Indikators 40 führt zu einer Änderung des Induktors der Spule 41. Über die Änderung der Induktivität der Spule 41 kann somit die Lage der Drahtseele 32 bestimmt werden.

Wesentlich ist nunmehr, dass unmittelbar nach der Kupplungsvorrichtung 24 die den Schweißdraht 13 führende Drahtseele 32 ungeführt angeordnet ist und die Drahtseele 32 einen bogenförmigen Verlauf 42, ausbildet, d.h., dass durch den bogenförmigen Verlauf 42 ein Draht-Pufferspeicher 43 geschaffen wird. Der Draht-Pufferspeicher 43 hat die Aufgabe, überschüssigen Schweißdraht 13 aufzunehmen bzw. abzugeben. Durch Veränderung des mittleren Radius 44 des bogenförmigen Verlaufs 42 wird gleichzeitig eine Längsbewegung des Endes der Drahtseele 32 verursacht. Mit Hilfe eines Sensors 39 kann beispielsweise über die Induktions-änderung der Spule 41 der Zustand des Draht-Pufferspeichers 43 ermittelt werden bzw. auf den Radius 44 des bogenförmigen Verlaufs 42 rückgeschlossen werden.

Grundsätzlich ist hierzu zu erwähnen, dass bei einer derartigen Drahtförderung im Schweißgerät 1 oder im Drahtvorschubgerät 11 üblicherweise eine weitere Antriebseinheit angeordnet ist, die den Schweißdraht 13 von der Drahtrolle bzw. der Vorratstrommel 14 abzieht und über das Schlauchpaket 23 in den Brennerkörper 27 fördert (nicht dargestellt). Die Antriebseinheit 35 im Schweißbrenner 10 dient dazu, den Schweißdraht 13 aus dem Schlauchpaket 23 zu ziehen und über den Rohrbogen 28 an die Schweißstelle weiter zu leiten. Fördert dabei die Antriebseinheit im Schweißgerät 1 bzw. im Drahtvorschubgerät 11 mehr Schweißdraht 13 als von der Antriebseinheit 35 im Schweißbrenner 13 abgefördert wird, so kann durch den Draht-Pufferspeicher 43 der überschüssige Schweißdraht 13 aufgenommen werden, wodurch sich der Radius 44 verkleinert. Gleichzeitig wird das Ende der Drahtseele 32, insbesondere der Indikator 40 nach vorne, also in Richtung zur Antriebseinheit 35 geschoben. Im umgekehrten Sinne ist es möglich, dass von der Antriebseinheit 35 mehr Schweißdraht 13 an die Schweißstelle gefördert wird, als von der Antriebseinheit im Schweißgerät 1 bzw. im Drahtvorschubgerät 11 in das Schlauchpaket 23 gefördert wird, so dass sich der Radius 44 des bogenförmigen Verlaufs 42 vergrößert, wobei das Ende der Drahtseele 32 sich von der Antriebseinheit 35 wegbewegt.

Speziell tritt ein derartiger Einsatz des Draht-Pufferspeichers 43 dann ein, wenn während eines Schweißprozesses der Schweißdraht 13 mit zeitlich variierender Geschwindigkeit gefördert wird oder eine Vor-/Rückwärtsbewegung des Schweißdrahtes 13 durchgeführt wird, so dass eine kurzzeitige Speicherung bzw. Entnahme von Schweißdraht 13 aus dem Draht-Pufferspeicher 43 eintritt. Somit wird in vorteilhafter Weise erreicht, dass das Ansprechverhalten bei der Drahtförderung bei unterschiedlicher Drahtfördergeschwindigkeit bzw. einer Vor-/Rückwärtsbewegung sehr verbessert wird, da der Draht-Pufferspeicher 43 unmittelbar hinter der Antriebseinheit 35 angeordnet ist und somit kaum Reibverluste entstehen können. Auch ein Nachlauf des Schweißdrahtes 13 bei einer Richtungsumkehr wird dabei von dem Draht-Pufferspeicher 43 aufgenommen, so dass eine sehr schnelle Richtungsumkehr möglich ist.

Weiters wurde schematisch eingezeichnet, dass die weiteren Leitungen, die vom Schlauchpaket 23 an den Schweißbrenner 10 zugeführt werden, seitlich an der Antriebseinheit 35 vorbeigeführt werden und somit in den Rohrbogen 28 geleitet werden können.

Um ein Einfädeln der Drahtseele 32 und ein automatisches Einfädeln des Schweißdrahtes 13 zu ermöglichen, ist es möglich, dass im Brennerkörper 27 Begrenzungselemente 45, wie schematisch eingezeichnet, angeordnet werden, so dass die Drahtseele 32 beim Einfädeln in den Sensor 39 geführt und somit der Schweißdraht 13 entsprechend positioniert wird. Anschließend kann beispielsweise vor dem Start des Schweißprozesses ein Abgleich vorgenommen werden, bei dem sich die Drahtseele 32 derart ausrichtet, dass sich eine Mittelstellung des bogenförmigen Verlaufs 42 im Draht-Pufferspeicher 43 ergibt.

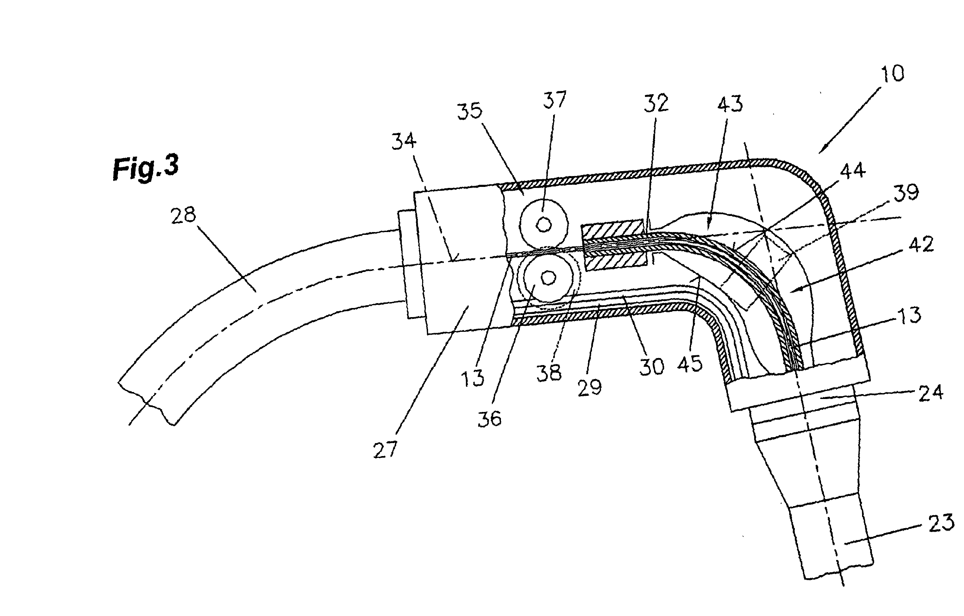

In Fig. 3 ist ein Ausführungsbeispiel dargestellt, bei dem die Drahtseele 32 im Bereich der Antriebseinheit 35 fixiert ist, wodurch das Ende der Drahtseele 32 keine Längsbewegung durchführen kann. Der Draht-Pufferspeicher 43 wird hierbei lediglich durch den bogenförmigen Verlauf 42 realisiert und somit durch Vergrö-ßerung oder Verkleinerung des Radius 44 mehr oder weniger Schweißdraht 13 im Draht-Pufferspeicher 43 gespeichert. Im Bereich der Kupplungsvorrichtung 24 kann die Drahtseele 32 ebenfalls fixiert werden, wodurch ein Einschieben der Drahtseele 32 in das Schlauchpaket 23 verhindert wird.

Durch diese Ausbildung ist eine gegenüber Fig. 2 geänderte Konstruktion des Messmittels, also des Sensors 39, notwendig. Beispielsweise ist es möglich, mit der freiliegenden Drahtseele 32, also dem bogenförmigen Verlauf 42, einen Hebelarm bzw. eine beweglich gelagerte Rolle zu verbinden, welcher bzw. welche beispielsweise mit einem Potentiometer oder einem Inkrementalgeber oder dergl. gekoppelt ist. Es ist auch möglich, eine optische Überwachung des Radius 44 des bogenförmigen Verlaufs 42 durchzuführen. Dazu kann der Sensor 39 durch lichtempfindliche und lichtaussendende Elemente gebildet werden, so dass je nach Abdeckung der optischen Elemente durch die Drahtseele 32 auf den Radius 44 des bogenförmigen Verlaufs 42 im Draht-Pufferspeicher 43 rückgeschlossen werden kann.

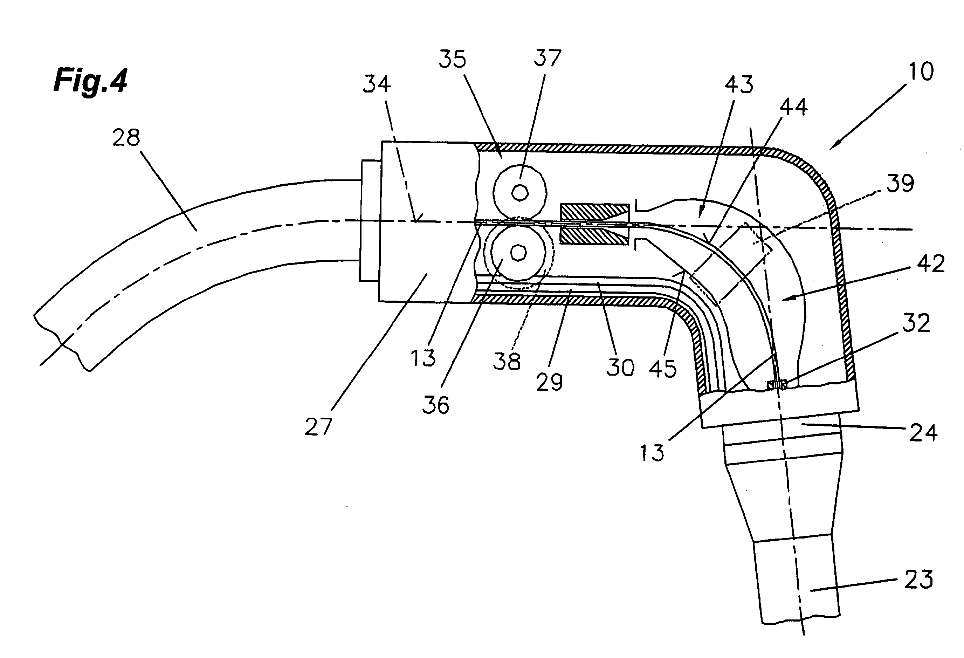

Beim Ausführungsbeispiel gemäß Fig. 4 endet die Drahtseele 32 unmittelbar nach der Kupplungsvorrichtung 24. Der Schweißdraht 13 verläuft freiliegend bis zur Antriebseinheit 35 und bildet wiederum den bogenförmigen Verlauf 42 mit einem Radius 44. Über eine entsprechende Ausbildung des Messmittels bzw. Sensors 39 kann auch hier in einfacher Form der Zustand des Draht-Pufferspeichers 43 erfasst und ausgewertet werden. Eine beweglich gelagerte Rolle oder eine optische Überwachung wird als Sensor 39 eingesetzt.

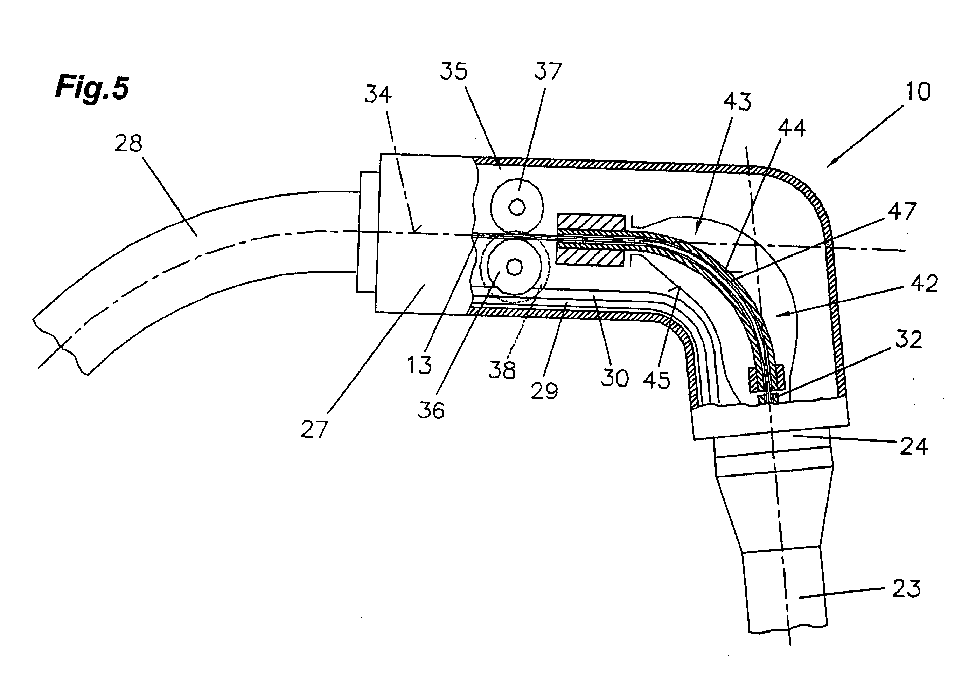

Weiters ist es entsprechend Fig. 5 auch möglich, den Schweißbrenner 10 derart auszubilden, dass die Drahtseele 32 im Bereich der Kupplungsvorrichtung 24 endet und der Schweißdraht 13 in einen im Schweißbrenner 10 angeordneten Führungsschlauch 47 übergeht, d.h., dass im Schweißbrenner 10 ein flexibler Führungsschlauch 47 mit dem schlaufenförmigen Verlauf angeordnet ist und die Drahtseele 32 somit im Bereich der Kupplungsvorrichtung 24 enden kann. Damit wird ein einfacher Tausch und ein einfaches und automatisches Wechseln der Drahtseele 32 sowie des Schweißdrahtes 13 ermöglicht. Die Ausbildung des Führungsschlauches 47 und die Erfassung des Radius 44, also des Zustandes des Draht-Pufferspeichers 43, kann entsprechend den zuvor beschriebenen Ausführungsbeispielen der Sensoren 39 durchgeführt werden.

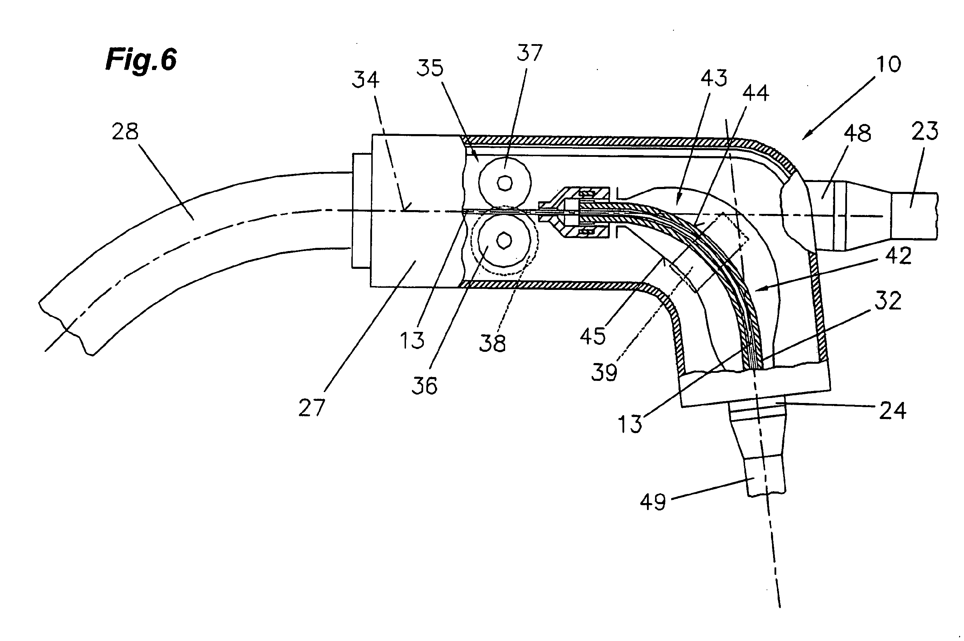

Gemäß einer weiteren Ausführungsform nach Fig. 6 ist es auch möglich, eine weitere Kupplungsvorrichtung 48 anzuordnen und eine Aufteilung der für einen Schweißprozess benötigten Leitungen durchzuführen. Dabei wird der Schweißdraht 13 winkelig, wie in den Fig. 2 bis 5 gezeigt, zum Schweißbrenner 10 zugeführt, wogegen die weiteren Leitungen zentrisch zur Längsachse des Schweißbrenners 10 angekoppelt werden, d.h., dass beispielsweise der Schweißdraht 13 über einen separaten Drahtführungsschlauch 49, der bei der Kupplungsvorrichtung 24 endet, an die Kupplungsvorrichtung 24 des Schweißbrenners 10 zugeführt und angeschlossen wird, wogegen die weiteren Leitungen über das Schlauchpaket 23 mit der weiteren Kupplungsvorrichtung 48 verbunden werden. Somit wird also der Schweißdraht 13 unabhängig von den weiteren Leitungen im Schlauchpaket 23 an den Schweißbrenner 10 geführt. Dabei ist in dem externen Drahtführungsschlauch 49 wiederum die Drahtseele 32 in einem bogenförmigen Verlauf 42 zur Bildung eines Draht-Pufferspeichers 43 angeordnet.

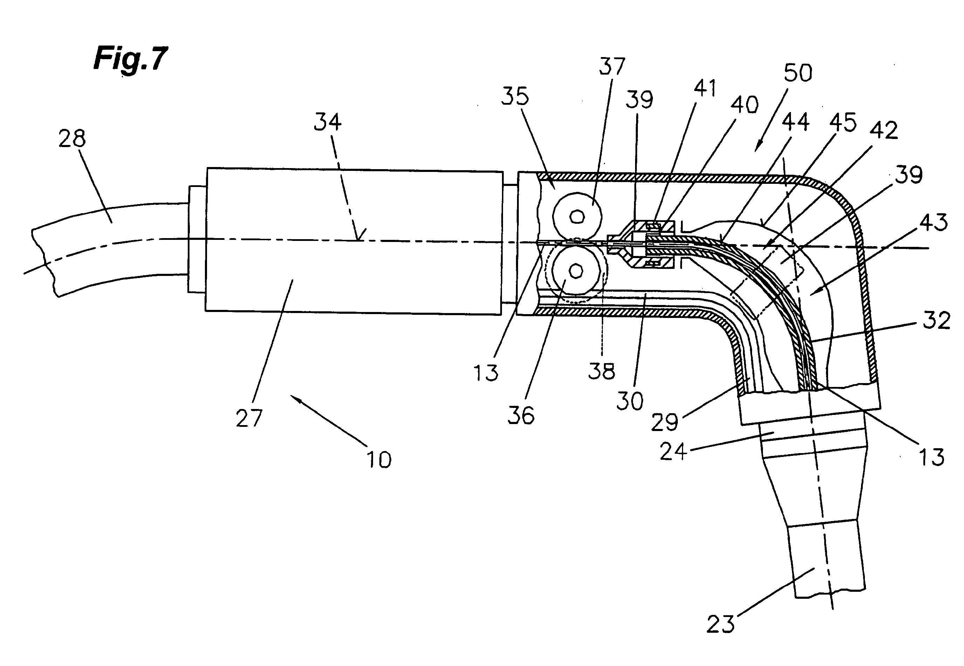

In Fig. 7 ist ein weiteres Ausführungsbeispiel dargestellt, bei dem die Antriebseinheit 35 ein eigenständiges Modul, insbesondere ein Antriebsmodul 50, ausbildet. Die Antriebseinheit 35 wird dabei, wie aus dem Stand der Technik bekannt, mit dem Brennerkörper 27 oder gleich direkt mit dem Rohrbogen 28 steckbar verbunden.

Die Anbindung des Antriebsmoduls 50 an das Schlauchpaket 23 kann dabei entsprechend den zuvor beschriebenen Fig. 1 bis 6 ausgeführt sein. Im Antriebsmodul 50 ist die Antriebseinheit 35 angeordnet und der Schweißdraht 13 bildet einen bogenförmigen Verlauf 42 mit einem Radius 44 zur Schaffung des Draht-Pufferspeichers 43. Die Verbindung mit dem Schlauchpaket 23 kann über die Kupplungsvorrichtung 24 oder 48 erfolgen. Selbstverständlich kann das Schlauchpaket 23, insbesondere die darin zugeführten Leitungen, direkt am Antriebsmodul 50 angeschlossen sein.

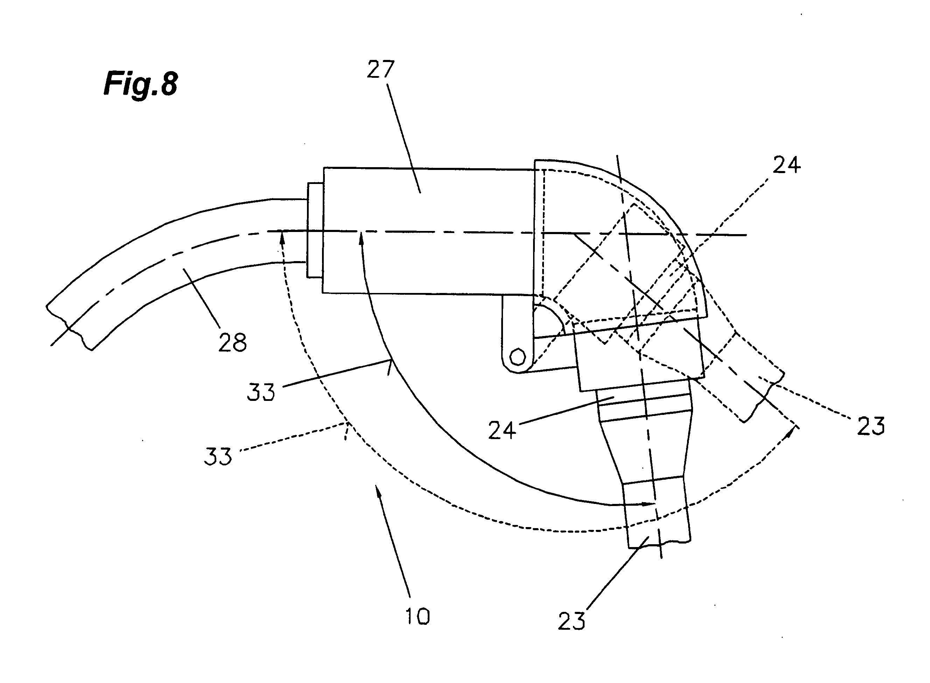

Weiters ist es bei den zuvor beschriebenen Ausführungsvarianten auch möglich, dass die Kupplungsvorrichtung 24 an einem Gehäuseteil des Brennerkörpers 27 angeordnet ist, der gegenüber den anderen Teilen des Brennerkörpers 27 verstellbar ist und somit die Winkelstellung, insbesondere der Winkel 33, veränderbar ist, so dass eine verstellbare Anbindung des Schlauchpaketes 23 möglich ist. Diese Ausbildung bringt den Vorteil, dass durch die Verstellung direkt auf die Ausbildung des bogenförmigen Verlaufs 42, also auf den Radius 44 des Schweißdrahtes 13, Einfluss genommen werden kann und somit die Größe des Draht-Pufferspeichers 43 variiert werden kann. Eine derartige Ausbildung ist in Fig. 8 gezeigt, wobei in strichlierten Linien eine zweite Stellung des Brennerkörpers 27 dargestellt ist.

## Patentansprüche

1. Schweißbrenner (10), mit einem Brennerkörper (27) und einer an einen Mittelachse (34) des Schweißbrenners (10) angeordneten Antriebseinheit (35) zum Fördern eines Schweißdrahtes (13), insbesondere für unterschiedliche Drahtfördergeschwindigkeiten oder eine Vor-/Rückwärts-Drahtförderung, und mit einem an den Brennerkörper (27) winkelig zu der Mittelachse (34) des Schweißbrenners (10) angeschlossenen Schlauchpaket (23), wobei eine Drahtseele (32) für den Schweißdraht (13) oder der Schweißdraht (13) selbst einen bogenförmigen Verlauf (42) zwischen der Antriebseinheit (35) und dem winkling angeordneten Schlauchpaket (23) zur Bildung eines Draht-Pufferspeichers (43) ausbildet, und die Menge des im Draht-Pufferspeicher (43) enthaltenen Schweißdrahtes (13) durch Veränderung des bogenförmigen Verlaufs einstellbar ist, **dadurch gekennzeichnet, dass** der Draht-Pufferspeicher (43) unmittelbar nach dem Bereich des Anschlusses des Schlauchpaketes (23) innerhalb des Brennerkörpers (27) und das Schlauchpaket (23) in einem Winkel (33) bis zu 90° zur Mittelachse (34) des Schweißbrenners (10) angeordnet ist, wobei ein Sensor (39) zur Erfassung des im Draht-Pufferspeicher (43) gespeicherten Schweißdrahtes (13) in Förderrichtung des Schweißdrahtes (13) gesehen vor der Antriebseinheit (35) angeordnet ist.

2. Schweißbrenner nach Anspruch 1, **dadurch gekennzeichnet, dass** die Drahtseele (32) im Endbereich im Brennerkörper (27) in Längsrichtung frei beweglich angeordnet ist.

3. Schweißbrenner nach Anspruch 2, **dadurch gekennzeichnet, dass** der Sensor (39) zur Erfassung der Bewegung der Drahtseele (32) im frei beweglichen Endbereich der Drahtseele (32) angeordnet ist.

4. Schweißbrenner nach Anspruch 3, **dadurch gekennzeichnet, dass** im frei beweglichen Endbereich der Drahtseele (32) ein Indikator (40) angeordnet ist, und dass der Sensor (39) zumindest eine den Indikator (40) umgebende Spule (41) aufweist, deren Induktivität durch die Lage des Indikators (40) veränderbar ist.

5. Schweißbrenner nach Anspruch 1, **dadurch gekennzeichnet, dass** die Drahtseele (32) im Bereich der Antriebseinheit (35) fixiert ist.

6. Schweißbrenner nach Anspruch 1, **dadurch gekennzeichnet, dass** die Drahtseele (32) unmittelbar nach dem Bereich des Anschlusses des Schlauchpaketes (23) am Brennerkörper (27) endet und der Schweißdraht (13) anschließend freiliegend bis zur Antriebseinheit (35) verläuft.

7. Schweißbrenner nach Anspruch 1, **dadurch gekennzeichnet, dass** die Drahtseele (32) unmittelbar nach dem Bereich des Anschlusses des Schlauchpaketes (23) am Brennerkörper (27) endet und der Schweißdraht (13) im Draht-Pufferspeicher (43) in einem flexiblen Führungsschlauch (47) angeordnet ist.

8. Schweißbrenner nach einem der Ansprüche 1 bis 7, **dadurch gekennzeichnet, dass** im Brennerkörper (27) Begrenzungselemente (45) zur Begrenzung des bogenförmigen Verlaufs des ungeführten Schweißdrahtes (13) angeordnet sind.

9. Schweißbrenner nach einem der Ansprüche 1 bis 8, **dadurch gekennzeichnet, dass** der Anschluss des Schlauchpaketes (23) am Brennerkörper (27) durch eine Kupplungsvorrichtung (24) gebildet ist.

10. Schweißbrenner nach einem der Ansprüche 1 bis 9, **dadurch gekennzeichnet, dass** das Schlauchpaket (23) gegenüber dem Brennerkörper (27) verstellbar angeordnet ist, so dass durch die Verstellung die Menge des im Draht-Pufferspeicher (43) enthaltenen Schweißdrahtes (13) veränderbar ist.

## Claims

1. A welding torch (10) including a torch body (27) and a drive unit (35) arranged on a central axis (34) of the welding torch (10) for conveying a welding wire (13), particularly for different wire-conveying speeds or a forward/rearward wire conveyance, as well as a hose pack (23) connected to the torch body (27) at an angle relative to the central axis (34) of said welding torch (10), wherein a wire core (32) for the welding wire (13), or the welding wire (13) itself, between the drive unit (35) and the hose pack (23) arranged at an angle, follows a curved course (42) to form a wire buffer storage (43), and the amount of welding wire (13) contained in the wire buffer storage (43) is adjustable by a change of said curved course, **characterised in that** the wire buffer storage (43) is arranged immediately after the region of connection of the hose pack (23) within the torch body (27), and that the hose pack (23) is arranged at an angle (33) of up to 90° relative to the central axis (34) of the welding torch (10), wherein a sensor (39) is arranged in front of the drive unit (35), viewed in the conveying direction of the welding wire (13), so as to detect the welding wire (13) stored in the wire buffer storage (43).

2. A welding torch according to claim 1, **characterised in that** the wire core (32) is arranged in the end region within the torch body (27) so as to be freely movable in the longitudinal direction.

3. A welding torch according to claim 2, **characterised in that** the sensor (39) is arranged to detect the movement of the wire core (32) in the freely movable end region of the wire core (32).

4. A welding torch according to claim 3, **characterised in that** an indicator (40) is arranged in the freely movable end region of the wire core (32), and that the sensor (39) comprises at least one coil (41) surrounding said indicator (40) and having an inductance that is changeable by the position of the indicator (40).

5. A welding torch according to claim 1, **characterised in that** the wire core (32) is fixed in the region of the drive unit (35).

6. A welding torch according to claim 1, **characterised in that** the wire core (32) terminates immediately after the region of connection of the hose pack (23) to the torch body (27), and that the welding wire (13) is subsequently arranged to extend exposedly as far as to the drive unit (35).

7. A welding torch according to claim 1, **characterised in that** the wire core (32) terminates immediately after the region of connection of the hose pack (23) to the torch body (27), and that the welding wire (13) is arranged in a flexible guide hose (47) within the wire buffer storage (43).

8. A welding torch according to any one of claims 1 to 7, **characterised in that** limit elements (45) are arranged in the torch body (27) to delimit the curved course of the unguided welding wire (13).

9. A welding torch according to any one of claims 1 to 8, **characterised in that** the connection of the hose pack (23) to the torch body (27) is realized by a coupling device (24).

10. A welding torch according to any one of claims 1 to 9, **characterised in that** the hose pack (23) is arranged to be adjustable relative to the torch body (27) so as to enable a change of the amount of welding wire (13) contained in the wire buffer storage (43) by such an adjustment.

## Revendications

1. Torche de soudage (10) comprenant un corps de torche (27) et une unité d'entraînement (35) disposée dans un axe médian (34) de la torche (10), destinée à entraîner un fil de soudure (35), en particulier conçue pour différentes vitesses d'entraînement du fil ou un entraînement en avant/en arrière du fil, et comprenant un faisceau de tuyaux flexibles (23) raccordés au corps de torche (27) sous un angle par rapport à l'axe médian (34) de la torche de soudage (10), une gaine de fil (32) pour le fil de soudure (13) ou le fil de soudure (13) lui même décrivant un chemin courbe (42) entre l'unité d'entraînement (35) et le faisceau de tuyaux flexibles (23) raccordés sous un angle, de manière à constituer une réserve tampon de fil (43), et la quantité de fil de soudure (13) contenue dans la réserve tampon de fil (43) étant réglable grâce à une modification de la trajectoire en courbe, **caractérisé en ce que** la réserve tampon de fil (43) est disposée immédiatement à la suite de la zone de raccordement du faisceau de tuyaux flexibles (23) à l'intérieur du corps de torche (27), et que le faisceau de tuyaux flexibles (23) est disposé selon un angle (33) pouvant atteindre 90° par rapport à l'axe médian (34) de la torche de soudage (10), un détecteur (39) destiné à détecter le fil de soudure (13) emmagasiné dans la réserve tampon de fil (43) étant agencé en amont de l'unité d'entraînement (35), vu dans le sens de l'avance du fil de soudure (13).

2. Torche de soudage selon la revendication 1, **caractérisée en ce que** la gaine de fil (32) est logée de façon librement mobile dans le sens longitudinal dans la partie terminale du corps de torche (27).

3. Torche de soudage selon la revendication 2, **caractérisée en ce que** le détecteur (39) de détection du mouvement de la gaine de fil (32) est disposé dans la partie terminale librement mobile de la gaine de fil.

4. Torche de soudage selon la revendication 3, **caractérisée en ce qu'**un indicateur (40) est disposé dans la partie terminale librement mobile de la gaine de fil (32), et **en ce que** le détecteur (39) comporte au moins une bobine (41) entourant l'indicateur (40), dont l'inductance peut être modifiée par la position de l'indicateur (40).

5. Torche de soudage selon la revendication 1, **caractérisée en ce que** la gaine de fil (32) est fixée au niveau de l'unité d'entraînement (35).

6. Torche de soudage selon la revendication 1, **caractérisée en ce que** la gaine de fil (32) se termine immédiatement au bout de la zone de raccordement du faisceau de tuyaux flexibles (23) sur le corps de torche (27), et que le fil de soudure (13) s'étend ensuite à découvert jusqu'à l'unité d'entraînement (35).

7. Torche de soudage selon la revendication 1, **caractérisée en ce que** la gaine de fil (32) se termine immédiatement au bout de la zone de raccordement du faisceau de tuyaux flexibles (23) sur le corps de torche (27), et que le fil de soudure (13) est disposé à l'intérieur d'un tube de guidage flexible (47) dans la réserve tampon de fil (43).

8. Torche de soudage selon l'une des revendications 1 à 7, **caractérisée en ce que** des éléments limiteurs (45) destinés à limiter la trajectoire courbe du fil de soudure non guidé (13) sont disposés à l'intérieur du corps de torche (27).

9. Torche de soudage selon l'une des revendications 1 à 8, **caractérisée en ce que** le raccordement du faisceau de tuyaux flexibles (23) sur le corps de torche (27) est constitué par un dispositif d'accouplement (24).

10. Torche de soudage selon l'une des revendications 1 à 9, **caractérisée en ce que** le faisceau de tuyaux flexibles (23) est disposé de façon réglable par rapport au corps de torche (27), de manière que le réglage permette de modifier la quantité de fil de soudure (13) contenue dans la réserve tampon de fil (43).
